(19) Europäisches Patentamt
European Patent Office
Office européen des brevets

(11) **EP 2 341 378 A1**

(12) **EUROPEAN PATENT APPLICATION**

(43) Date of publication:
06.07.2011 Bulletin 2011/27

(51) Int Cl.:
*G02B 6/34* (2006.01)     *G02B 6/27* (2006.01)
*G02B 6/12* (2006.01)     *G02F 1/095* (2006.01)

(21) Application number: 09306281.8

(22) Date of filing: 18.12.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Alcatel Lucent
75008 Paris (FR)

(72) Inventor: Duan, Guang-Hua
91767, PALAISEAU (FR)

(74) Representative: Shamsaei Far, Hassan
Alcatel Lucent
Intellectual Property & Standards
54 rue La Boétie
75008 Paris (FR)

(54) **A photonic integrated circuit with optical isolator**

(57) A photonic integrated circuit device having an optical isolator, the optical isolator comprising an optical multiplexer and a magneto-optic element. The optical multiplexer comprises a plurality of waveguides, at least one waveguide being capable of carrying optical wavelengths in transverse magnetic mode, wherein at least one waveguide has a partial length introduced inside the magneto-optic element. The magneto-optic element is configured to cause a phase change in a forward direction of propagation of a wavelength and a phase change in a backward direction of propagation of the wavelength. The phase change in the backward direction of propagation of a wavelength in one waveguide differs from the phase change of the backward direction of propagation of that wavelength in another waveguide such that they mutually cancel each other completely or partially. A method of manufacturing the photonic device and a method of blocking or reducing feedback light in a photonic device are also disclosed.

Fig. 1

## Description

The present invention relates to photonic components.

## BACKGROUND ART

Currently there is a general trend, in the field of photonic components, toward manufacturing Photonic integrated Circuits (PICs) due to their usually compact size and good performance. In a PIC, a number of functions such as lasing, modulation, wavelength multiplexing, etc. are integrated on the same substrate. Currently, PICs with 40 lasers modulated at 40 Gbit/s have already been demonstrated.

## SUMMARY

In general a laser source is sensitive to feedback generated by other elements to which the laser source is coupled or even from external elements on the transmission line. Such feedback produces undesired effects that perturb the correct functioning of the laser source. This problem becomes even more critical in PICs because these devices usually comprise a number of elements which typically create such unwanted feedback. In principle an unwanted feedback may be generated from an interface between two elements where such interface produces a certain discontinuity or coupling effect. Therefore, such feedback effects are common in PICs because of the existence of various interfaces within a compact structure.

Optical isolators are typically capable of preventing all or some of such feedbacks. There are different types of optical isolators available in the market. The function of an optical isolator is, in general terms, to allow the light to pass substantially undisturbed in one direction and to block or substantially reduce the passage of light in an opposite direction.

At commercial level, conventional optical isolators are usually used as discrete components. These optical isolators comprise an input polarizer, a polarization rotator and an output polarizer. The non-reciprocal polarization rotation caused by the Faraday effect allows to filter out any external feedback. However some solutions directed to integrating laser sources and optical isolators have been proposed such as for example US Patent Number 7567604.

At the research and development level, two kinds of optical isolators are known that are in fact integrated on a single laser (however, not on a PIC). The first one of said known isolators is based on the use of non-reciprocal refractive index change in some materials such as YIG (Y.Shoji, I-Wei Hsieh, R.M.Osgood, Jr., and T.Mizumoto, "Polarization-independent magneto-optical waveguide isolator using TM-mode nonreciprocal phase shift," J. Light wave Technol., 25, 3108 - 3113 (2007)). The second known solution is based on the use of non-reciprocal losses in the ferro-magneto-optic material such as Fe:Co (H.Shimizu and Y.Nakano, "Fabrication and characterization of an InGaAsP/InP active waveguide optical isolator with 14.7dB/mm TE mode nonreciprocal attenuation," J. Lightwave Technol., 24, 38-43 (2006)).

While the basic concepts for integrating such types of optical isolators into a single laser (not a PIC) have been demonstrated, in practice no integration of such kind of optical isolator to a PIC is known to have been proposed.

It is therefore desirable to provide a solution for integrating optical isolators in a PIC, in order to prevent feedbacks from other elements of the PIC to these lasers.

This solution allows to isolate laser source(s) from a feedback produced by other elements of the PIC, which can potentially reflect light back into the laser source(s).

In the context of the present specification, the terms "forward propagation direction" or "forward direction of propagation" or similar terms are to be understood to relate to a direction of propagation of the light which is emitted from a laser source and therefore it travels away from the laser source. Also, the terms "backward propagation direction" or "backward direction of propagation" are to be understood to relate to a direction of propagation of the light which travels towards a laser source and therefore it is opposite to the are to be understood to relate to a direction of propagation of the light which is emitted from a laser source and therefore it travels away from the laser source. Accordingly some embodiments feature a photonic integrated circuit device having an optical isolator, the optical isolator comprising an optical multiplexer and a magneto-optic element, the optical multiplexer comprising a plurality of waveguides, at least a first waveguide and a second waveguide are each capable of carrying optical wavelengths in transverse magnetic mode in a forward propagation direction and in a backward propagation direction, wherein said first waveguide and second waveguide have each a respective partial length introduced inside the magneto-optic element and wherein the magneto-optic element is configured to introduce a first phase change in a backward propagation direction on a wavelength travelling within the partial length of the first waveguide introduced in the magneto-optic element, and to introduce a second phase change in a backward propagation direction on the same wavelength travelling within the partial length of the second waveguide introduced in the magneto-optic element, wherein the first phase change differs from the second phase change such that, in an interference, they mutually cancel each other completely or partially.

According to some specific embodiments a phase change of a wavelength travelling inside the partial length of the first waveguide inside the magneto-optic material travelling in the backward propagation direction differs from a phase change of the same wavelength travelling inside the partial length of another waveguide, neighboring the first waveguide, inside the magneto-optic material travelling in the backward propagation direction by $2\pi/N$, with a modulus $2\pi$. According to some to specific embodiments, the magneto-optic element is configured to introduce a third phase change in the forward propagation direction on a wavelength travelling within the partial length of the first waveguide introduced in the magneto-optic element, and to introduce a second phase change in forward propagation direction on the same wavelength travelling within the partial length of the second waveguide introduced in the magneto-optic element, wherein the first phase change differs from the second phase change by a factor of $2k\pi$ where k is an integer number.

According to some specific embodiments, the plurality of waveguides are comprised in an arrayed waveguide grating or in a Mach-Zehnder interferometer. According to some specific embodiments, the photonic integrated device comprises an arrayed waveguide grating coupled to a Mach-Zehnder interferometer type optical isolator.

According to some specific embodiments, the magneto-optic element is made of garnet.

According to some specific embodiments, the magneto-optic element has a trapezoidal or triangular cross-section providing a plurality of propagation lengths such that inside each propagation length a partial length of a waveguide is introduced, wherein the partial length of a waveguide varies linearly with respect to the partial length of a neighboring waveguide according to the following relationship:

$$\Delta L = \frac{m\lambda}{N\,\Gamma\left(n^{+} - n^{-}\right)}$$

where $\Delta L$ is the difference in partial length between two neighboring waveguides coupled to (or introduced in) the magneto-optic material, $n^{+}$ is the refractive index in the forward propagation direction of the magneto-optic material, n- is the refractive index in the backward propagation direction of the magneto-optic material, N is the number of waveguides, $\Gamma$ is the mode confinement factor in the magneto-optic material, A is an average wavelength value obtained from respective values of wavelengths travelling in the waveguides and m is an integer number.

Some embodiments feature a method of manufacturing a photonic integrated circuit device having an optical isolator, the optical isolator comprising an optical multiplexer and a magneto-optic element, the optical multiplexer comprising a plurality of waveguides, at least a first waveguide and a second waveguide are each capable of carrying optical wavelengths in transverse magnetic mode in a forward propagation direction and in a backward propagation direction, the method comprising:

- introducing a partial length of the first waveguide and a partial length of the second waveguide inside the magneto-optic element wherein the magneto-optic element is configured to introduce a first phase change in a backward propagation direction on a wavelength travelling within the partial length of the first waveguide introduced in the magneto-optic element, and to introduce a second phase change in a backward propagation direction on the same wavelength travelling within the partial length of the second waveguide introduced in the magneto-optic element, wherein the first phase change differs from the second phase change such that, in an interference, they mutually cancel each other completely or partially.

Some embodiments feature a method for blocking or reducing feedback light in a photonic integrated circuit device having an optical isolator, the optical isolator comprising an optical multiplexer and a magneto-optic element, the optical multiplexer comprising a plurality of waveguides, at least a first waveguide and a second waveguide are each capable of carrying optical wavelengths in transverse magnetic mode in a forward propagation direction and in a backward propagation direction, wherein a partial length of the first waveguide and a partial length of the second waveguide are each introduced inside the magneto-optic element, the method comprising:

- introducing a first phase change in a backward propagation direction on a wavelength travelling within the partial length of the first waveguide introduced in the magneto-optic element,
- introducing a second phase change in a backward propagation direction on the same wavelength travelling within the partial length of the second waveguide introduced in the magneto-optic element,
- causing the first phase change to interfere with the second phase change such that they mutually cancel each other completely or partially.

According to some specific embodiments, a phase change of a wavelength travelling inside the partial length of the first waveguide inside the magneto-optic material travelling in the backward propagation direction differs from a phase change of the same wavelength travelling inside the partial length of another waveguide, neighboring the first waveguide, inside the magneto-optic material travelling in the backward propagation direction by $2\pi/N$, with a modulus $2\pi$.

According to some to specific embodiments, the method further comprises:

- introducing a first phase change, by the magneto-optic element, in the forward propagation direction on a wavelength travelling within a partial length of a first waveguide introduced in the magneto-optic element, and

- introducing a second phase change, by the magneto-optic element, in the forward propagation direction on the same wavelength travelling within a partial length of a waveguide introduced in the magneto-optic element neighboring the first waveguide, wherein the first phase change differs from the second phase change by a factor of $2k\pi$ where k is an integer number.

Some embodiments feature an optical component comprising the photonic integrated device as described and claimed herein.

These and further features and advantages of the present invention are described in more detail in the following description as well as in the claims with the aid of the accompanying drawings.

**BRIEF DESCRIPTION OF THE DRAWINGS**

Figure 1 is an exemplary schematic representation of a PIC having an optical isolator comprising an arrayed waveguide grating coupled to a magneto-optic element according to some embodiments.
Figure 2 is an exemplary schematic representation of a PIC comprising a Mach-Zehnder interferometer type optical isolator according to some embodiments.
Figure 3 is an exemplary schematic representation of a PIC comprising an arrayed waveguide grating coupled to a Mach-Zehnder interferometer type isolator according to some embodiments.

DETAILED DESCRIPTION

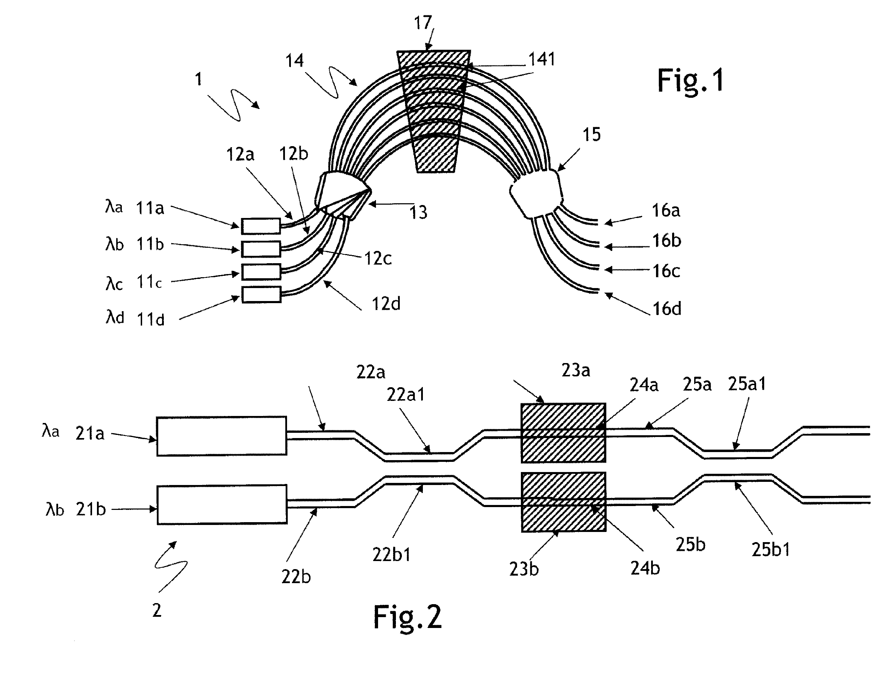

As shown in figure 1, an arrayed waveguide grating (AWG) 1 is coupled to a plurality of laser sources $11_a$, $11_b$, $11_c$ and $11_d$ by means of optical waveguides $12_a$, $12_b$, $12_c$ and $12_d$ respectively. The laser sources $11_a$, $11_b$, $11_c$ and $11_d$ are configured to emit light in transverse magnetic (TM) mode or in transverse electric (TE) mode. However, any TE mode emission is converted into TM mode in order to become susceptible to non-reciprocal phase change properties caused by a magneto-optic element as will be described in further detail below. The laser sources $11_a$, $11_b$, $11_c$ and $11_d$ are assumed to emit light at different wavelengths $\lambda_a$, $\lambda_b$, $\lambda_c$ and $\lambda_d$ respectively. The wavelengths $\lambda_a$, $\lambda_b$, $\lambda_c$ and $\lambda_d$ enter into an input free space region 13 where they are diffracted and subsequently input into a plurality of waveguides shown by the general reference numeral 14. The waveguides have different lengths, the lengths typically vary from one waveguide to the next neighboring waveguide at a constant value. The difference in lengths of the waveguides causes a phase change on the wavelengths that travel through them with respect to the same wavelengths that travel through another waveguide, for example the neighboring waveguide. The plurality of wavelengths, with corresponding phase changes as a function of the length of the respective waveguide through which they have travelled arrive at the output free space region 15 are diffracted from each of the waveguides 14 toward the output waveguides $16_a$, $16_b$, $16_c$ and $16_d$. The diffraction of the wavelengths $\lambda_a$, $\lambda_b$, $A_c$ and $A_d$ (with corresponding phase changes) are focused at an output waveguide, for example $16_a$ where they interfere constructively thereby reconstructing the original wavelengths $\lambda_a$, $\lambda_b$, $\lambda_c$ and $\lambda_d$ at the output of the AWG. It is to be noted that it is also possible to focus the diffraction of the wavelengths $\lambda_a$, $\lambda_b$, $\lambda_c$ and $\lambda_d$ at some or all of the other output waveguides, e.g. $16_b$, $16_c$ and $16_d$ in case a particular application of the device would require such option.

Furthermore, although in figure 1 the number of wavelengths (or the number of laser sources) shown is 4, in practice, this number can vary for example to 8, 10, 16, 32 or even more.

According to some embodiments of the invention, a magneto-optic element 17 is coupled, for example bonded, to the AWG. As shown in the figure, the magneto-optic element 17 is bonded at the top part of the waveguides of the AWG. However this is only exemplary and the magneto-optic element may be coupled at other positions along the waveguides 14. At least a partial length of each of the waveguides 14 is introduced inside the magneto-optic element 17, said partial lengths are shown in figure 1 by the general reference numeral 141.

The magneto-optic element 17 has non-reciprocal phase change properties. This property is effective on transverse magnetic mode TM of the wavelength travelling therethrough. In fact, any transverse electric TE mode generated by the lasers $11_a$, $11_b$, $11_c$ and $11_d$ is first converted into TM mode before being introduce inside the magneto-optic element 17 (through corresponding waveguides). For the sake of simplicity, any reference to the term "wavelength" in the context of such wavelength being subjected to non-reciprocal phase change properties of a magneto-optic element is to be understood to refer to a TM mode of the optical signal.

Due to said non-reciprocal phase change properties, a wavelength travelling through the magneto-optic element along the length 141 of the waveguide in a forward direction of propagation (in this example from left to right in the AWG of figure 1) undergoes a phase change which is different from a corresponding phase change when the same wavelength travels in the backward direction of propagation, opposite to the forward direction of propagation (in this example from right to left in the AWG of figure 1). This property is useful in order to block or substantially reduce unwanted feedback towards the laser sources $11_a$, $11_b$, $11_c$ and $11_d$ as will be described in detail further below.

Preferably, the partial length 141 of the individual waveguides 14 varies linearly from one partial length to another, i.e. each partial length differs from the immediately previous (or next) partial length by a constant multiplying factor. This is because a linear change of the partial length may allow to achieve constructive interference at the output waveguides, and destructive interference at the input waveguides.

Therefore the following equation holds:

$$\Delta L = \frac{m\lambda}{N\,\Gamma\left(n^+ - n^-\right)}$$

where ΔL is the difference in partial length between two neighboring waveguides coupled to (or introduced in) the magneto-optic material, $n^+$ is the refractive index in the forward propagation direction of the magneto-optic material, $n^-$ is the refractive index in the backward propagation direction of the magneto-optic material, N is the number of waveguides, Γ is the mode confinement factor in the magneto-optic material, A is an average wavelength value obtained from the respective values of the various wavelengths $\lambda_a$, $\lambda_b$, $\lambda_c$ and $\lambda_d$ used in the device and m is an integer number.

Due to such linear variation, a preferred shape of the magneto-optic element 17 may be in trapezoidal cross-section as represented in figure 1.

In order to avoid feedback from the interface provided by the magneto-optic material at the entry point of the waveguide therein (for example the entry of the waveguides in the magneto-optic material from the left side of the latter as seen in figure 1), the waveguides may be tapered in order to avoid reflections towards the laser sources. The tapered waveguides may have a waveguide width which progressively decreases thereby confining the mode in the desired (for example lateral) direction, leading to a larger vertical mode size. As a result, the mode will also experience the magneto-optical materials bonded above.

In order to more effectively isolate the laser sources $11_a$, $11_b$, $11_c$ and $11_d$ from feedback and avoid perturbation in the wavelength multiplexer function, it is preferred that the phase change between two neighboring waveguides 14 in the forward propagation direction to be a multiple of 2π, and the phase change between two neighboring waveguides 14 in the backward propagation direction be 2π/N with modulus of 2π.

This means that when the wavelengths are travelling inside the partial lengths within the magneto-optic element and in the forward propagation direction (left to right in figure 1), each particular wavelength (for example $\lambda_a$) will undergo a phase change which differs from the same wavelength $\lambda_a$) in the neighboring waveguide by 2kπ, where k is an integer. Therefore when these corresponding wavelengths arrive at an output waveguide (for example $16_a$) they interfere constructively.

On the contrary, when the wavelengths are travelling inside the partial lengths within the magneto-optic element and in the backward propagation direction (right to left in figure 1), each particular wavelength (for example $\lambda_a$) will undergo a phase change which differs from the same wavelength ($\lambda_a$) in the neighboring waveguide by 2πN where N is the number of the waveguides (the modulus 2π, in practice maintains the phase difference at 2π/N). Therefore when these corresponding wavelengths are reflected back to an input optical waveguide (for example $12_a$) they all together interfere destructively thereby mutually cancel each other.

Considering the example shown in figure 1 where six waveguides are shown to be coupled to the free space region 13, the phase change between any two neighboring waveguides is 2πIG. Therefore the interference resulting from all these waveguides will be destructive. This is because a vectorial addition is made between N vectors having a phase shift of 2πN between two neighboring vectors.

Such phase change conditions may be satisfied by designing the proper length of the magneto-optic element and the mode confinement factor in the magneto-optic element. As a non-limitative example it is assumed that garnet (Ce:YIG) is bonded on InP. It may be demonstrated that a 90° of non-reciprocal phase shift may be achieved in such a structure with a garnet length of about 3.7 mm (Ref: Tetsuya Mizumoto and Yuya Shoji, "Integrated Waveguide Optical Isolators: Principle and History", Proceedings of Conference on Lasers and Electro-Optics, paper CThC1, 2008). In the case of this example, the total non-reciprocal phase shift desried is 360°, the length difference may be about 15 mm. By enhancing the light confinement in the garnet through an optimization of the InP waveguide structure, the length difference may be able to be reduced to less than 5 mm.

It is to be noted that the condition that the phase change between any two neighboring waveguides is 2π/N is in fact an ideal situation whereby complete cancellation of the interfering wavelengths is achieved. However it may occur that the phase difference between two neighboring waveguides 14 in the backward propagation direction is not precisely 2π/N with modulus of 2π. In such case, there may be a fraction of feedback light reflected back to the laser source. However, if the amount of such feedback is not significantly high, some feedback to the laser source may be tolerable. For example, a typical laser may be capable of resisting up to about -40 dB of feedback ratio without suffering substantial degradation in performance. Therefore, a level of tolerance representing a minor amount of feedback, within a limit identified according to the requirements of each particular application, such as the example given above, would also be allowable for practical purposes and is to be understood to represent a tolerance level within the scope of embodiments of the present invention as claimed herein.

Also in order to improve performance it is preferable that the magneto-optic element is designed in such a way that all waveguides introduced inside the magneto-optic element are in parallel (linear or curvilinear) configuration with respect to each other. This is desirable because the difference in a non-reciprocal phase shift generated in a waveguide and that generated in the next (or previous) neighboring waveguide becomes equal for configurations having trapezoidal cross section or triangular cross-section in the shape of the magneto-optic material.

Figure 2 is an exemplary schematic representation of a PIC 2 comprising a Mach-Zehnder interferometer type optical isolator according to some embodiments. The PIC 2 typically comprises two laser sources $21_a$ and $21_b$ configured to generate respective wavelengths $\lambda_a$ and $\lambda_b$. These two wavelengths are guided through respective waveguides $22_a$ and $22_b$.

Typically in a Mach-Zehnder interferometer, a certain coupling zone is provided between the two waveguides $22_a$ and $22_b$. This coupling zone is schematically shown in figure 2 by means of the portions $22_{a1}$ and $22_{b1}$ of the waveguides $22_a$ and $22_b$ which are represented to be at a closer distance to each other, as compared to the rest of the lengths of the waveguides. The fact that these waveguide portions, $22_{a1}$ and $22_{b1}$ are located physically close to each other gives rise to an optical coupling between the two waveguides $22_a$ and $22_b$ thereby coupling the wavelength travelling through one waveguide, say $\lambda_a$ through $22_a$ to the other waveguide say $22_b$. Similarly the wavelength say $\lambda_b$ travelling through the waveguide $22_b$ is coupled to the other waveguide $22_a$. Therefore, after travelling through the coupling zone $22_{a1}$ and $22_{b1}$ as described above, each waveguides $22_a$ and $22_b$ typically carries the two wavelengths $\lambda_a$ and $\lambda_b$ (it is to be noted that the proportion of signal power corresponding to each wavelength in each waveguide is typically the same, in order to achieve a high isolation ratio).

As shown in figure 2, a respective partial length of the waveguides $22_a$ and $22_b$ is introduced in a respective magneto-optic elements $23_a$ and $23_b$. Said partial lengths are shown in figure 2 by reference numerals $24_a$ and $24_b$. The waveguides are then coupled to one or more output ports $25_a$ and $25_b$ (certain Mach-Zehnder interferometers may comprise only one multiplexed output and certain others may comprise more than one output port). The output ports $25_a$ and $25_b$ are then coupled to second coupling zone $25_{a1}$ and $25_{b1}$ with a functionality similar to that of the coupling zone $22_{a1}$ and $22_{b1}$.

It is to be noted that although not shown in figure 2, the magneto-optic materials $23_a$ and $23_b$ are biased by opposite magneto-optic fields in order to provide non-reciprocal phase change properties with effect that are comparable or similar to what was discussed above in relation to figure 1, which has the effect of blocking or substantially reducing unwanted feedback towards the laser sources.

In this embodiment, similar to the embodiment discussed in relation to figure 1, in order to effectively isolate the laser sources $21_a$ and $21_b$ from feedback and avoid perturbation in the wavelength multiplexer function, it is preferred that the phase change between the two neighboring waveguides $22_a$ and $22_b$ in the forward propagation direction to be a multiple of $2\pi$, and the phase change between the two neighboring waveguides $22_a$ and $22_b$ in the backward propagation direction be $\pi$ with modulus of $2\pi$ (because in this case N = 2).

The effect of such forward propagation and backward propagation phase changes is similar to that described in relation to figure 1, namely the wavelengths interfere constructively in a forward propagation direction and the same wavelengths interfere destructively (to block or substantially reduce unwanted feedback) in the backward propagation direction.

Such conditions may be satisfied by designing the proper length of the magneto-optic element and the mode confinement factor in the magneto-optic element (in analogy to the non-limitative example provided in relation to figure 1).

It is possible to isolate more than only two wavelengths, for example when 4, 8, or more channels are required to be isolated. In such case, the free spectral range of the MZI should preferably be the same the channel spacing if all these wavelength are sent into the same input 21a or 21 b. However, if for example the even wavelength channels are sent into one input, and odd wavelength channels are sent into the other input, the free spectral range of the MZI should preferably be twice the channel spacing. In this context, the free spectral range is the spacing between two successive optical intensity maxima or minima of an interferometer, in terms of optical frequency or wavelength.

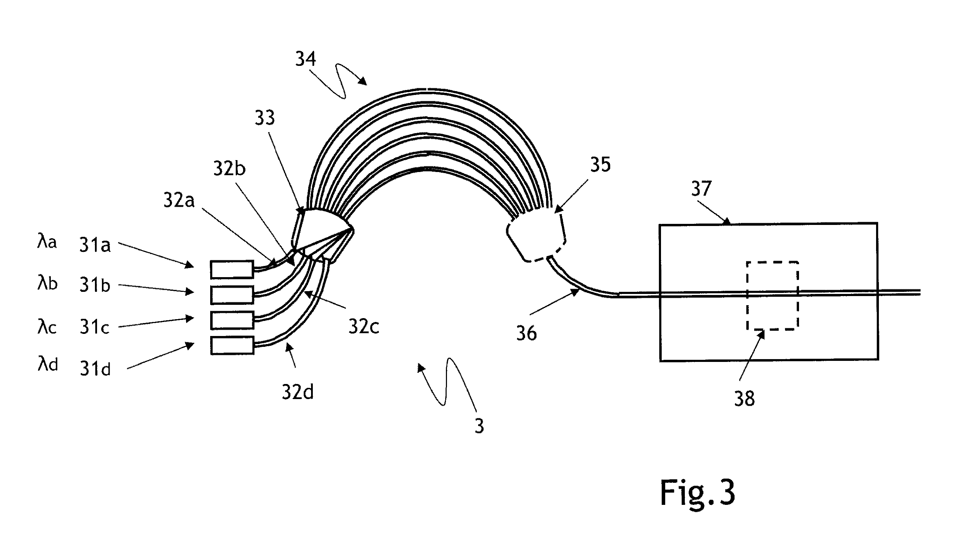

In such arrangement, one may simply integrate the Mach-Zehnder interferometer type isolator after the AWG as shown in figure 3.

Figure 3 is an exemplary schematic representation of a PIC comprising an arrayed waveguide grating coupled to a Mach-Zehnder interferometer type isolator according to some embodiments.

In figure 3, there is shown an array waveguide grating 3, coupled to a plurality of laser sources $31_a$, $31_b$, $31_c$ and $31_d$ by means of optical fibers $32_a$, $32_b$, $32_c$ and $32_d$ respectively. The laser sources $31_a$, $31_b$, $31_c$ and $31_d$ are assumed to emit light at different wavelengths $\lambda_a$, $\lambda_b$, $\lambda_c$ and $\lambda_d$ respectively. The wavelengths $\lambda_a$, $\lambda_b$, $\lambda_c$ and $\lambda_d$ enter into an input free space region 33 where they are diffracted and subsequently input into a plurality of waveguides shown by the general reference numeral 34. The waveguides have different lengths, the lengths typically vary from one waveguide to the next neighboring waveguide at a constant value. The difference in lengths of the waveguides causes a phase change on the wavelengths that travel though them with respect to the same wavelengths that travel through another waveguide, for example the neighboring waveguide. The plurality of wavelengths, with corresponding phase changes as a function of the length of the respective waveguide through which they have travelled arrive at the output free space region 35 and are diffracted from each of the waveguides 34 toward the output waveguide 36. The diffraction of the wavelengths $\lambda_a$, $\lambda_b$, $\lambda_c$, and $\lambda_d$ (with corresponding phase changes) are focused at the output waveguide 36 where they interfere constructively thereby reconstructing, the original wavelengths $\lambda_a$, $\lambda_b$, $\lambda_c$ and $\lambda_d$ at the output of the AWG.

The output wavelengths $\lambda_a$, $\lambda_b$, $\lambda_c$ and $\lambda_d$ are then input into the Mach-Zehnder interferometer 37 through the single waveguide 36. The Mach-Zehnder interferometer 37 operates as an optical isolator comprising a magneto-optic element which is schematically shown in figure 3 by reference numeral 38. The structure and functionality of the Mach-Zehnder interferometer 37 is similar to that of figure 2. Therefore, a detailed description thereof is not provided for briefness.

The wavelengths $\lambda_a$, $\lambda_b$, $\lambda_c$ and $\lambda_d$ travelling inside the magneto-optic element 38 each undergo a phase change which is substantially of the same amount for each of the wavelengths.

Here again, in analogy to the embodiments of figures 1 and 2, in order to more effectively isolate the laser sources $31_a$, $31_b$, $31_c$ and $31_d$ from feedback and avoid perturbation in the wavelength multiplexer function, it is preferred that the phase change between two neighboring waveguides for all the wavelengths travelling in the forward propagation direction to be a multiple of $2\pi$, and the phase change between two neighboring waveguides for all the wavelengths travelling in the backward propagation direction be $2\pi/N$ with modulus of $2\pi$. The effect of such forward propagation and backward propagation phase changes is similar to that described in relation to figure 1, namely the wavelengths interfere constructively in a forward propagation direction and the same wavelengths interfere destructively (to block or substantially reduce unwanted feedback) in the backward propagation direction.

Such conditions may be satisfied by designing the proper length of the magneto-optic element and the mode confinement factor in the magneto-optic element (in analogy to the non-limitative example provided in relation to figure 1).

In this manner, according to the embodiments described herein, feedback of light to the laser source(s) is blocked or substantially reduced in a structure where the optical isolator is integrated in the same PIC as the laser source(s). Therefore, by allowing integration of the optical isolator into the PIC, manufacturing costs may be reduced by eliminating the need for an external magneto-optic element.

The material used for a magneto-optic element may be any known material available on the market. For example the magneto-optic element may be made of ferro-magneto-optic materials such as garnet.

The various embodiments of the present invention may be combined as long as such combination is compatible and/or complimentary.

Further it is to be noted that the list of structures corresponding to the claimed means is not exhaustive and that one skilled in the art understands that equivalent structures can be substituted for the recited structure without departing from the scope of the invention as claimed herein.

It is also to be noted that the order of the steps of the method of the invention as described and recited in the corresponding claims is not limited to the order as presented and described and may vary without departing from the scope of the invention.

It should be appreciated by those skilled in the art that any block diagrams herein represent conceptual views of illustrative circuitry embodying the principles of the invention.

## Claims

1. A photonic integrated circuit device having an optical isolator, the optical isolator comprising an optical multiplexer and a magneto-optic element, the optical multiplexer comprising a plurality of waveguides, at least a first waveguide and a second waveguide are each capable of carrying optical wavelengths in transverse magnetic mode in a forward propagation direction and in a backward propagation direction, wherein said first waveguide and second waveguide have each a respective partial length introduced inside the magneto-optic element and wherein the magneto-optic element is configured to introduce a first phase change in a backward propagation direction on a wavelength travelling within the partial length of the first waveguide introduced in the magneto-optic element, and to introduce a second phase change in a backward propagation direction on the same wavelength travelling within the partial length of the second waveguide introduced in the magneto-optic element, wherein the first phase change differs from the second phase change such that, in an interference, they mutually cancel each other completely or partially.

2. The device of claim 1 wherein a phase change of a wavelength travelling inside the partial length of the first waveguide inside the magneto-optic material travelling in the backward propagation direction differs from a phase change of the same wavelength travelling inside the partial length of another waveguide, neighboring the first waveguide, inside the magneto-optic material travelling in the backward propagation direction by $2\pi/N$, with a modulus $2\pi$.

3. The device of claim 1 or claim 2 wherein the magneto-optic element is configured to introduce a third phase change in the forward propagation direction on a wavelength travelling within the partial length of the first waveguide introduced in the magneto-optic element, and to introduce a second phase change in forward propagation direction on the same wavelength travelling within the partial length of the second waveguide introduced in the magneto-optic element, wherein the first phase change differs from the second phase change by a factor of 2kπ where k is an integer number.

4. The device of any one of the previous claims wherein the plurality of waveguides are comprised in an arrayed waveguide grating

5. The device of any one of the previous claims 1 to 3 wherein the plurality of waveguides are comprised or in a Mach-Zehnder interferometer.

6. The device of any one of the claim 1 to 3 wherein the photonic integrated device comprises an arrayed waveguide grating coupled to a Mach-Zehnder interferometer type optical isolator.

7. The device of any one of the previous claims wherein the magneto-optic element is made of garnet.

8. The device of any one of the previous claims 1 to 4 wherein the magneto-optic element has a trapezoidal cross-section providing a plurality of propagation lengths such that inside each propagation length a partial length of a waveguide is introduced, wherein the partial length of a waveguide varies linearly with respect to the partial length of a neighboring waveguide according to the following relationship:

$$\Delta L = \frac{m\lambda}{N\,\Gamma\left(n^+ - n^-\right)}$$

where ΔL is the difference in partial length between two neighboring waveguides coupled to (or introduced in) the magneto-optic material, $n^+$ is the refractive index in the forward propagation direction of the magneto-optic material, n- is the refractive index in the backward propagation direction of the magneto-optic material, N is the number of waveguides, Γ is the mode confinement factor in the magneto-optic material, λ is an average wavelength value obtained from respective values of wavelengths travelling in the waveguides and m is an integer number.

9. A method of manufacturing a photonic integrated circuit device having an optical isolator, the optical isolator comprising an optical multiplexer and a magneto-optic element, the optical multiplexer comprising a plurality of waveguides, at least a first waveguide and a second waveguide are each capable of carrying wavelengths in transverse magnetic mode in a forward propagation direction and in a backward propagation direction, the method comprising:

- introducing a partial length of the first waveguide and a partial length of the second waveguide inside the magneto-optic element wherein the magneto-optic element is configured to introduce a first phase change in a backward propagation direction on a wavelength travelling within the partial length of the first waveguide introduced in the magneto-optic element, and to introduce a second phase change in a backward propagation direction on the same wavelength travelling within the partial length of the second waveguide introduced in the magneto-optic element, wherein the first phase change differs from the second phase change such that, in an interference, they mutually cancel each other completely or partially.

10. A method for blocking or reducing feedback light in a photonic integrated circuit device having an optical isolator, the optical isolator comprising an optical multiplexer and a magneto-optic element, the optical multiplexer comprising a plurality of waveguides, at least a first waveguide and a second waveguide are each capable of carrying optical wavelengths in transverse magnetic mode in a forward propagation direction and in a backward propagation direction, wherein a partial length of the first waveguide and a partial length of the second waveguide are each introduced inside the magneto-optic element, the method comprising:

- introducing a first phase change in a backward propagation direction on a wavelength travelling within the partial length of the first waveguide introduced in the magneto-optic element,
- introducing a second phase change in a backward propagation direction on the same wavelength travelling within the partial length of the second waveguide introduced in the magneto-optic element,
- causing the first phase change to interfere with the second phase change such that they mutually cancel each other completely or partially

11. The method of claim 10 further comprising wherein a phase change of a wavelength travelling inside the partial length of the first waveguide inside the magneto-optic material travelling in the backward propagation direction differs from a phase change of the same wavelength travelling inside the partial length of another waveguide, neighboring the first waveguide, inside the magneto-optic material travelling in the backward propagation direction by 2π/N, with a modulus 2π.

12. The method of claim 10 further comprising:

- introducing a first phase change, by the magneto-optic element, in the forward propagation direction on a wavelength travelling within a partial length of a first waveguide introduced in the magneto-optic element, and
- introducing a second phase change, by the magneto-optic element, in the forward propagation direction on the same wavelength travelling within a partial length of a waveguide introduced in the magneto-optic element neighboring the first waveguide, wherein the first phase change differs from the second phase change by a factor of $2k\pi$ where k is an integer number.

13. An optical component comprising the photonic integrated device of any one of claims 1 to 8.

Fig.1

Fig.2

37

38

λa 31a
λb 31b
λc 31c
λd 31d

32a
32b
33
34
32c
32d
35
36
3

Fig.3

Europäisches
Patentamt
European
Patent Office
Office européen
des brevets

**EUROPEAN SEARCH REPORT**

Application Number

EP 09 30 6281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/047531 A1 (FUJITA JUNICHIRO [US] ET AL) 11 March 2004 (2004-03-11) | 1-3,5,7, 9-13 | INV. G02B6/34 |
| Y | * paragraphs [0003] - [0021]; figures 1-3 * | 4,6,8 | G02B6/27 G02B6/12 G02F1/095 |
| X | US 2005/089258 A1 (KIM YOUNG-IL [KR] ET AL) 28 April 2005 (2005-04-28) * the whole document * | 1-3,5, 9-13 | |
| X | YOKOI H ET AL: "DEMONSTRATION OF AN OPTICAL ISOLATOR BY USE OF A NONRECIPROCAL PHASE SHIFT" APPLIED OPTICS, OPTICAL SOCIETY OF AMERICA, US LNKD-DOI:10.1364/AO.38.007409, vol. 38, no. 36, 20 December 1999 (1999-12-20), pages 7409-7413, XP000893819 ISSN: 0003-6935 * the whole document * | 1-3,5, 9-13 | |
| X | ZAMAN T R ET AL: "Semiconductor Waveguide Isolators" JOURNAL OF LIGHTWAVE TECHNOLOGY, IEEE SERVICE CENTER, NEW YORK, NY, US, vol. 26, no. 2, 15 January 2008 (2008-01-15), pages 291-301, XP011204230 ISSN: 0733-8724 * page 293; figure 4 * | 1-3,5, 9-13 | TECHNICAL FIELDS SEARCHED (IPC) G02B G02F |
| Y | EP 1 640 754 A1 (ST MICROELECTRONICS SRL [IT]) 29 March 2006 (2006-03-29) * the whole document * | 4,6,8 | |
| A | US 2006/045412 A1 (XIAO GAOZHI [CA] ET AL) 2 March 2006 (2006-03-02) * paragraph [0029]; figure 9 * | 1,4,6,8 | |

-/--

The present search report has been drawn up for all claims

| Place of search | Date of completion of the search | Examiner |
|---|---|---|
| Munich | 5 May 2010 | Wolf, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 09 30 6281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 406 918 A (MESOPHOTONICS LTD [GB]) 13 April 2005 (2005-04-13) * page 1, line 6 - page 10, line 13; figures 1-14 * ----- | 1,4,6,8 | |
| | | | **TECHNICAL FIELDS SEARCHED (IPC)** |

The present search report has been drawn up for all claims

| Place of search | Date of completion of the search | Examiner |
|---|---|---|
| Munich | 5 May 2010 | Wolf, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 6281

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2010

| Patent document cited in search report | | Publication date | Patent family member(s) | | Publication date |
|---|---|---|---|---|---|
| US 2004047531 | A1 | 11-03-2004 | NONE | | |
| US 2005089258 | A1 | 28-04-2005 | JP 2005128531 A<br>KR 20050038891 A | | 19-05-2005<br>29-04-2005 |
| EP 1640754 | A1 | 29-03-2006 | US 2006188193 A1 | | 24-08-2006 |
| US 2006045412 | A1 | 02-03-2006 | NONE | | |
| GB 2406918 | A | 13-04-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7567604 B

**Non-patent literature cited in the description**

- **Y.SHOJI ; I-WEI HSIEH ; R.M.OSGOOD, JR. ; T.MIZUMOTO.** Polarization-independent magneto-optical waveguide isolator using TM-mode nonreciprocal phase shift. *J. Light wave Technol.,* 2007, vol. 25, 3108-3113
- **H.SHIMIZU ; Y.NAKANO.** Fabrication and characterization of an InGaAsP/InP active waveguide optical isolator with 14.7dB/mm TE mode nonreciprocal attenuation. *J. Lightwave Technol.,* 2006, vol. 24, 38-43
- **TETSUYA MIZUMOTO ; YUYA SHOJI.** Integrated Waveguide Optical Isolators: Principle and History. *Proceedings of Conference on Lasers and Electro-Optics,* 2008